# EUROPÄISCHE PATENTSCHRIFT

(11) **EP 0 504 210 B1**
(45) Veröffentlichungstag und Bekanntmachung des Hinweises auf die Patenterteilung: **30.03.1994**
(21) Anmeldenummer: 91900213.9
(22) Anmeldetag: 04.12.1990
(51) Int. Cl.: B60T 8/42, B60T 8/48

(54) **BREMSDRUCK-REGELSYSTEM FÜR BREMSANLAGEN**
BRAKE PRESSURE REGULATING SYSTEM FOR BRAKE INSTALLATIONS
SYSTEME DE REGLAGE DE PRESSION DE FREINAGE POUR DISPOSITIFS DE FREINAGE

(30) Priorität: 05.12.1989 DE 3940180
(43) Veröffentlichungstag der Anmeldung: 23.09.1992
(73) Patentinhaber: ROBERT BOSCH GMBH, 70442 Stuttgart (DE)
(72) Erfinder: ZIRPS, Wilhelm, D-7251 Hemmingen (DE)
(86) Internationale Anmeldenummer: EP9002086
(87) Internationale Veröffentlichungsnummer: WO9108130

(56) Entgegenhaltungen:
- DE-A- 1 964 819
- DE-A- 3 215 739
- DE-A- 3 626 291
- DE-A- 3 727 330
- DE-A-37 377 26
- FR-A- 2 588 813
- GB-A- 2 194 010

## Beschreibung

Die Erfindung betrifft ein Bremsdruck-Regelsystem für Bremsanlagen mit Antiblockier- und Antriebsschlupfregelung gemäß der Gattung des Hauptanspruchs.

Derartige Bremsdruck-Regelsysteme für Bremsanlagen mit einem geschlossenen Antiblockierregelungssystem und einem Antriebsschlupfregelungssystem sind bekannt und in verschiedenen Ausführungsformen im Gebrauch. Bei diesen wird im Fall der Blockierneigung eines Rades die Antiblockierregelung eingeleitet, indem zum Zweck des Druckabbaus in den entsprechenden Radbremszylindern die Rückführung von Bremsflüssigkeit zum Hauptbremszylinder mittels einer Rückförderpumpe bewirkt wird.

Aus der DE-OS 32 15 739 ist eine Antriebsschlupfregelung für Fahrzeuge bekannt, bei der zur Bremsdruckerniedrigung mittels eines Steuerventils Druckmittel in eine Speicherkammer abgelassen wird und dieses Druckmittel sodann mittels einer Rückförderpumpe in die Verbindung zwischen dem Hauptbremszylinder und dem Bremsdrucksteuerventil rückgefördert wird. Die Rückförderpumpe ist bei dieser Antriebsschlupfregelung als Saugpumpe ausgebildet und zwischen dem Hauptbremszylinder und dem Eingang der Pumpe ist eine Verbindungsleitung mit einem Umschaltventil eingeschaltet.

Als problematisch erweist sich bei der Rückförderung von Bremsflüssigkeit, daß bei bestimmten Fahrzuständen der Bremsdruck zur Erhaltung der Fahrstabilität bei geregeltem Bremsen sehr weit abgebaut werden muß, andererseits aber kein Unterdruck im Bremssystem entstehen sollte, da hieraus die Gefahr des Eindringens von Luft resultiert. Bei bekannten Rückförderpumpen wird deshalb der Öffnungsdruck eines an der Rückförderpumpe befindlichen Einlaßventils auf > 1 bar eingestellt. Dadurch wird der Förderraum der Pumpe beim Bremsdrücken von < 1 bar nicht mehr gefüllt und die Rückförderung unterbrochen. Als nachteilig erweist sich hierbei jedoch, daß mittels der Rückförderpumpe aus dem belüfteten Vorratsbehälter keine Bremsflüssigkeit angesaugt werden kann und so auch eine erwünschte Mehrfachbenutzung für die Antiblockier- oder Antriebsschlupfregelung nicht möglich ist.

Zwar ist die Begrenzung des Bremsdruckes nach unten, bei der Rückförderung im Regelfall, prinzipiell durch ein zusätzliches Vorspannventil möglich. Das Vorspannventil wird dabei vom Einlaßventil der Rückförderpumpe aus, auf den Rückförderfluß bezogen, stromaufwärts in den Rückförderkanal eingebaut und verhindert somit den Druckabfall im Rückförderkanal unter den zuvor eingestellten Druck. Stromabwärts, hinter dem Vorspannventil, mündet die an einen Vorratsbehälter angeschlossene Leitung in den Saugkanal der Pumpe. Im Bedarfsfall kann somit durch die Rückförderpumpe Bremsflüssigkeit aus dem Vorratsbehälter angesaugt werden, ohne daß der Druck im Rückförderkanal dadurch unzulässig abfällt.

Bei bekannten Vorspannventil-Ausführungen handelt es sich um Ventile mit federbelastetem kugel- oder kegelförmigem Schließkörper, die in Öffnungsrichtung durchströmt werden. Diese Ventile besitzen jedoch eine relativ große Hysterese zwischen Öffnungs- und Schließdruck und sind deshalb nicht genau einstellbar. Dies resultiert aus der Tatsache, daß das Öffnen und Schließen eines federbelasteten Ventils nicht plötzlich erfolgt, weil eine ideale und absolut formgenaue Sitzgeometrie nicht realisierbar ist. Vielmehr führen Formungenauigkeiten, Rauhigkeit und Führungsspiel dazu, daß beim Schließen des Ventils sich der Schließkörper und der Ventilsitz zunächst nur stellenweise berühren. Erst nach Steigerung der Schließkraft und damit verbundener Ausrichtung sowie elastischer Verformung legt sich der Schließkörper am ganzen Umfang des Ventilsitzes an und bewirkt hierdurch die völlige Abdichtung. Entsprechend verhält es sich im umgekehrten Fall des Öffnungsvorgangs. Zwischen dem voll geöffneten und geschlossenen Zustand muß die Schließkraft um einen bestimmten Betrag erhöht werden. Diese erforderliche Schließkraft-Differenz nimmt mit Verbesserung der Sitzgeometrie zwar ab, die fertigungstechnischen Möglichkeiten und entsprechenden Kosten setzen jedoch Grenzen.

Eine kleine Ventil-Hysterese, d.h. eine kleine Druckdifferenz zwischen dem Öffnen und Schließen des Ventils ist jedoch erforderlich, um aus regelungstechnischen Gründen ein möglichst niedriges Bremsdruckniveau erreichen zu können, andererseits aber entstehenden Unterdruck sicher zu vermeiden.

### Vorteile der Erfindung

Ein Bremsdruck-Regelsystem mit den Merkmalen des Hauptanspruches ermöglicht, das Auftreten von Unterdruck in den Bremskreisen zu vermeiden, indem zum einen durch die Ausdehnungskammer Flüssigkeitsvolumen zur erforderlichen Druckabsenkung aufgenommen wird und zum andern durch die in der Ausdehnungskammer bewegliche Schließeinrichtung ein steiler Schließkraft-Gradient erzielt wird. Dieser wird dadurch erreicht, daß die Schließkraft durch eine im Verhältnis zum Ventilsitz große Fläche des im Ausdehnungsraum befindlichen Kolbens beeinflußt wird. Aufgrund des Verhältnisses zwischen Ventilsitz und der, hierauf bezogen, großen Fläche des Kolbens haben bereits kleine Druckdifferenzen große Schließkraft-Differenzen zur Folge, woraus ein enges Beieinanderliegen des Öffnungs- und Schließdrucks resultiert. Die aus der kleinen Druckdifferenz zwischen Öffnen und Schließen folgende geringe Ventil-Hysterese erleichtert ebenfalls die Justierung der Schließeinrichtung.

Veränderungen des Einstelldrucks, die sich während einer längeren Betriebsdauer ergeben könnten, sind sehr gering, da sich verschleißbedingte Änderungen der Ventilsitzbreite auf die Schließkraft der Schließeinrichtung nur wenig auswirken.

Als vorteilhaft erweist sich auch, daß die Schließeinrichtung über längere Betriebszeiten geöffnet ist und nur in der unmittelbaren Öffnungs- und Schließphase enge Spaltöffnungen entstehen. Hierdurch wird die kritische Betriebsphase, bei der aufgrund hoher Durchflußgeschwindigkeit der Bremsflüssigkeit ein größerer Verschleiß bedingt ist, zeitlich auf ein Minimum reduziert. Die Verwendung von Schließkörpern aus Kunststoff oder Gummi ist deshalb ebenfalls möglich.

Die Kombination der Ausdehnungskammer mit der Schließeinrichtung führt schließlich auch zu einer kostengünstigen Lösung. Im Gegensatz zu einer Lösung, die einer Speicherkammer vorgeschaltete Vorspannventile mit entsprechenden Federn, Führungskolben, Deckeln und Dichtringen erfordern würde, ist vorliegend lediglich eine zusätzliche in der Ausdehnungskammer vorgesehene Schließeinrichtung erforderlich. Hierdurch wird daher ebenfalls der für eine eventuelle, separate Ventil-Lösung benötigte zusätzliche Bauraum eingespart. Erheblich kostengünstiger ist die vorliegende Lösung insbesondere gegenüber unter Zuhilfenahme von Magnetventilen erfolgenden Druckregelungen. Auch würden die an sich schon erheblich teureren Magnetventile darüber hinaus eine Stromversorgung mit Ansteuerung erfordern.

### Zeichnung

Die Erfindung wird nachfolgend anhand der Zeichnung näher erläutert.

Es zeigen:
Figur 1 eine blockschaltbildliche Darstellung eines Regelsystems für eine KFZ-Bremsanlage mit zwei System-Varianten A und B,
Figur 2 eine vergrößerte Darstellung der aus Figur 1 ersichtlichen Ausdehnungskammer und
Figur 3 eine weitere Ausführungsform der erfindungsgemäßen Ausdehnungskammer.

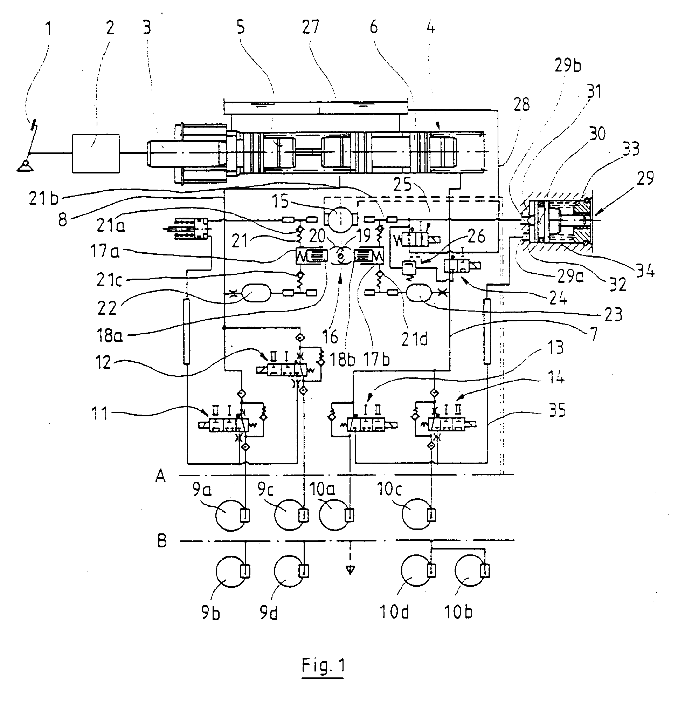

Aus dem durch Figur 1 dargestellten Regelsystem für die Bremsdruckregelung einer KFZ-Bremsanlage ist ein Bremspedal 1, ein Bremskraftverstärker 2 sowie eine Druck- stange 3 eines Hauptbremszylinders 4 ersichtlich. Die Druckstange 3 wirkt auf einen Druckstangenkolben 5 sowie auf einen Schwimmkolben 6. Über Bremsleitungen 7 und 8 ist der Hauptbremszylinder 4 mit den Radbremszylindern 9a, b der linken Vorderräder sowie 9c, d der rechten Vorderräder und mit den Radbremszylindern 10a, b der linken Hinterräder sowie 10c, d der rechten Hinterräder verbunden.

Die Varianten a und b der Radbremszylinder 9 und 10 stellen verschiedene Systemvarianten dar. Die Systemvariante A unterscheidet sich von der Systemvariante B dadurch, daß bei der Systemvariante A die Vorderräder jeweils über Magnetventile 11 und 12 mit Bremsflüssigkeit versorgt werden, während die Hinterräder bei der Systemvariante A über die Magnetventile 13 und 14 und bei der Systemvariante B nur über das Magnetventil 14 mit Bremsflüssigkeit versorgt werden, wobei bei dieser Systemvariante die Möglichkeit gegeben ist, statt der Antriebsschlupfregelung auch andere, hier nicht gezeigte Regel-Einrichtungen an das Regelsystem anzuschliessen.

In das Bremsdruck-Regelsystem eingebunden sind desweiteren eine durch einen Motor 15 betriebene Rückförderpumpe 16. Diese besteht aus in Pumpenzylindern 17a, b beweglichen Förderkolben 18a, b, die über einen an einer Pumpenantriebswelle 19 angeordneten Exzenter 20 angetrieben werden. An den Pumpenzylindern 17a, b sind Rückschlagventile 21 vorgesehen, die entsprechend ihrer Anordnung in bezug auf die Pumpenzylinder 17a, b als Pumpeneinlaßventile 21a, b oder Pumpenauslaßventile 21c, d ausgebildet sind.

In die von der Rückförderpumpe 16 wegführenden Bremsleitungen sind Dämpferkammern 22 und 23 eingeschaltet.

Weiterhin sind in das Bremsdruck-Regelsystem zwei weitere Magnetventile 24 und 25 sowie ein Druckbegrenzungsventil 26 eingeschaltet. über das Magnetventil 25 kann durch die Rückförderpumpe 16 aus dem Vorratsbehälter 27 über die Bremsleitung 28 Bremsflüssigkeit angesaugt werden.

Die Ausdehnungskammer 29 besitzt eine Zuflußöffnung 29a sowie eine Abflußöffnung 29b. Die Schließeinrichtung wird gebildet durch den Kolben 30 sowie einen mit diesem verbundenen Schließkörper 31 und den unmittelbar an der Abflußöffnung 29b angebrachten Ventilsitz 32. Der Kolben 30 wird gegen eine Feder 33 bewegt, die in einem Feder-Einbauraum 34 befindlich ist.

Das vorliegende Bremsdruck-Regelsystem arbeitet folgendermaßen:

Die Fahrzeug-Abbremsung wird durch Drücken auf das Pedal 1 eingeleitet, wobei die Betätigungskraft in einem, hier nicht näher beschriebenen, Bremskraftverstärker 2 verstärkt und auf die Druckstange 3 des Hauptbremszylinders 4 übertragen wird. Vom Druckstangen-Kolben 5 und dem Schwimmkolben 6 wird Bremsflüssigkeit, bei gleichzeitig ansteigendem Bremsdruck, verdrängt.

Über Bremsleitungen 7 und 8 sowie über die Magnetventile 11, 12 und 14 (bei Systemvariante B) bzw. über die Magnetventile 11, 12, 14 und 13 (bei Systemvariante A) gelangt die verdrängte Bremsflüssigkeit in die Radbremszylinder 9a bis d der Vorderräder sowie 10a bis d der Hinterräder. Bei Blockierneigung eines Rades wird über eine, aus der Zeichnung nicht ersichtliche, Sensor- und Steuereinrichtung der Motor 15 der Rückförderpumpe 16 eingeschaltet. Dieser treibt die Rückförderpumpe 16 an, die aus in den Pumpenzylindern 17a und 17b beweglichen Förderkolben 18a, b sowie den Pumpeneinlaßventilen 21a, b und den Pumpenauslaßventilen 21c, d besteht. Gleichzeitig wird das Magnetventil 14 angesteuert und in die Schaltstellung II gebracht. Bei der Systemvariante B fließt Bremsflüssigkeit aus beiden Radbremszylindern der Hinterräder 10b, d bei Systemvariante A nur aus dem Radbremszylinder des Hinterrades 10c über den Kanal 35 zur Ausdehnungskammer 29.

Die Ausdehnungskammer 29 nimmt das Bremsflüssigkeitsvolumen, das zur erforderlichen Druckabsenkung den Radbremszylindern entnommen wird, auf, wobei der Kolben 31 sich, auf die Zeichnung bezogen, nach rechts gegen die Feder 33 bewegt. Da der Feder-Einbauraum 34 mit der Atmosphäre verbunden ist, ist zum Verschieben des Kolbens 31 gegen die Feder 33 sowie zum Öffnen der aus dem Schließkörper 31 und dem Ventilsitz 32 bestehenden Schließeinrichtung ein Druck > 1 bar in der Ausdehnungskammer 29 erforderlich. Hierdurch ist auszuschließen, daß im Bremsdruck-Regelverlauf möglicherweise am Pumpeneinlaßventil 21b der Rückförderpumpe 16 auftretender Unterdruck sich über die Ausdehnungskammer 29 durch die Bremsleitung 35 sowie die Magnetventile 13 und 14 in die Radbremszylinder der Hinterräder 10a bis d fortpflanzt.

Der Förderkolben 18b fördert aus der Ausdehnungskammer 29 über das Pumpeneinlaßventil 21b sowie das Pumpenauslaßventil 21d und die Dämpferkammer 23 Bremsflüssigkeit in die Bremsleitung 7 und von hier über das Magnetventil 24 in den Hauptbremszylinder 4.

Ist bei der Antriebs-Schlupfregelung das Abbremsen eines Hinterrades notwendig (Systemvariante A) so wird der Motor 15 der Rückförderpumpe 16 über eine, aus der Zeichnung nicht ersichtliche, Sensor- und Steuereinrichtung eingeschaltet. Gleichzeitig werden die Magnetventile 24 und 25 aktiviert und in Schaltstellung I gebracht. Über die Bremsleitung 28, das Magnetventil 25 sowie das Pumpeneinlaßventil 21b kann der Förderkolben 18a Bremsflüssigkeit aus dem Vorratsbehälter 27 ansaugen und über das Pumpenauslaßventil 21d in die Bremsleitung 7 fördern. Über die Sensor- und Steuereinrichtung werden die Magnetventile 13 und 25 entsprechend aktiviert und die Hinterräder gezielt abgebremst. Alternativ ist es möglich, wie bei Systemvariante B, statt einer Antriebsschlupfregelung auch andere, hier nicht gezeigte Regel-Einrichtungen an die Rückförderpumpe 16 anzuschließen.

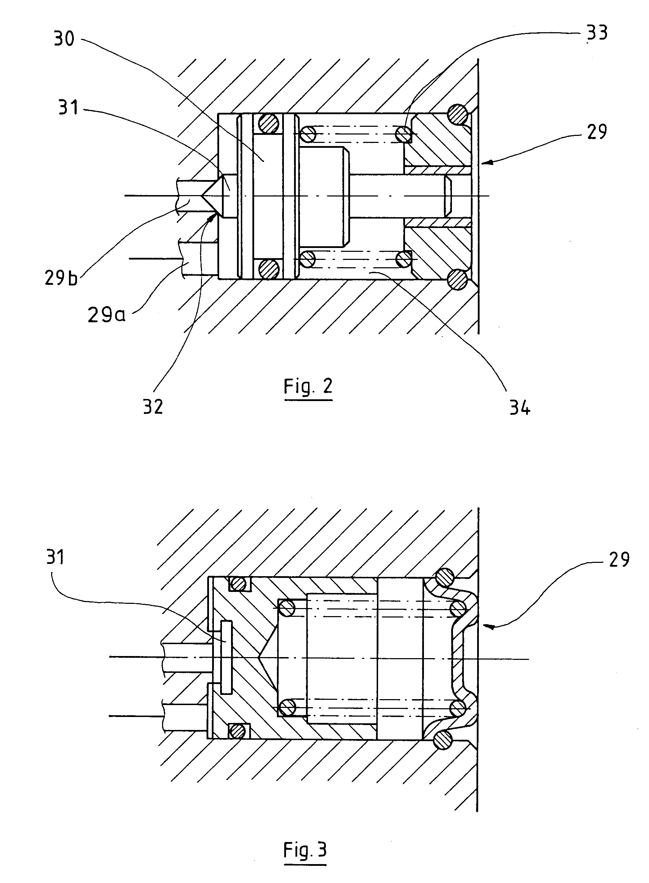

In Figur 2 ist die aus dem Bremsdruck-Regelsystem der Figur 1 ersichtliche, erfindungsgemäße Ausdehnungskammer 29 vergrößert dargestellt. Die Schließeinrichtung der Ausdehnungskammer 29 wird gebildet durch den mit dem Kolben 30 verbundenen Schließkörper 31 und den unmittelbar an der Abflußöffnung 29b angebrachten Ventilsitz 32. Zur Druckabsenkung in den Radbremszylindern wird diesen Bremsflüssigkeitsvolumen entnommen und der Ausdehnungskammer 29 zugeführt. Hierbei bewegt sich der Kolben 30 gegen eine Feder 33 nach rechts. Da der Feder-Einbauraum 34, wie bereits ausgeführt, mit der Atmosphäre verbunden ist, ist zum Verschieben des Kolbens 30 sowie zum Öffnen der Schließeinrichtung ein Druck von > 1 bar in der Ausdehnungskammer 29 erforderlich. Die Schließeinrichtung besitzt einen sehr steilen Schließkraft-Gradienten, da die Schließkraft durch die gegenüber dem Ventilsitz 32 größer ausgebildete Fläche des Kolbens 30 beeinflußt wird. Aus diesem Grund haben bereits kleine Druckdifferenzen große Schließkraft-Differenzen zur Folge, so daß der Öffnungs- und Schließdruck eng beieinanderliegen. Hierdurch wird somit eine kleine Ventil-Hysterese erreicht.

Die Ausführungsform der Ausdehnungskammer 29 der Figur 3 unterscheidet sich von der in Figur 2 gezeigten Ausführungsform dadurch, daß der Schließkörper 31 aus Kunststoff oder Gummi besteht. Die weiteren Merkmale sind entsprechend der in Figur 2 dargestellten Ausdehnungskammer 29 ausgeführt.

## Patentansprüche

1. Bremsdruck-Regelsystem für Bremsanlagen mit Antiblockier- und Antriebsschlupfregelung mit einem durch ein Bremspedal (1) betätigbaren Hauptbremszylinder (4) zur Erzeugung von Bremsdruck für zumindest einen Bremskreis, in dem Bremsleitungen (7,8) zu entsprechenden Radbremszylindern, (9a,9b,9c,9d,10a,10b,10c,10d) führen, wobei in die Bremsleitungen (7,8) Bremsdrucksteuerventile in Form von Magnetventilen (11,12,13,14) eingeschaltet sind, welche wahlweise den Hauptbremszylinder (4) mit den Radbremszylindern (9a,9b,9c,9d,10a,10b,10c,10d) verbinden oder die Verbindung unterbrechen oder bei über eine Rückförderpumpe (16) bewirkten Rückförderung von Bremsflüssigkeit die Radbremszylinder (9a,9b,9c,9d,10a,10b,10c,10d) mit dem Hauptbremszylinder (4) verbinden, wobei an der Rückförderpumpe (16) Ein- und Auslaßventile (21a,21b,21c,21d) angeordnet sind, über die Bremsflüssigkeit aus einem Vorratsbehälter (27) ansaugbar und weiterleitbar ist, wobei die Auslaßventile (21c,21d) mit Dämpferkammern (22,23) verbunden sind, dadurch gekennzeichnet, daß zwischen den Radbremszylindern (10a bis d) und der Rückförderpumpe (16) zumindest eine Ausdehnungskammer (29) angeordnet ist, an der mindestens eine Zuflußöffnung (29a) und Abflußöffnung (29b) sowie eine Schließeinrichtung vorgesehen ist, die aus einem mit einem Kolben (30), einer Membran oder dergleichen verbundenen Schließkörper (31) besteht, wobei unmittelbar an der Abflußöffnung (29b) ein Ventilsitz (32) angebracht ist.

2. Bremsdruck-Regelsystem nach Anspruch 1, dadurch gekennzeichnet, daß der Durchmesser des Ventilsitzes (32) im Verhältnis zur Fläche des Kolbens (30) reduziert ist.

3. Bremsdruck-Regelsystem nach Anspruch 1 oder 2, dadurch gekennzeichnet, daß der Schließkörper (31) aus Kunststoff oder Gummi besteht.

4. Bremsdruck-Regelsystem nach einem der vorhergehenden Ansprüche, dadurch gekennzeichnet, daß bei Einströmen von Bremsflüssigkeit in die Ausdehnungskammer (29) der Kolben (30) gegen eine Feder (33) beweglich ist.

5. Bremsdruck-Regelsystem nach Anspruch 4, dadurch gekennzeichnet, daß der Kolben (30) bei einem Druck von > 1 bar in der Ausdehnungskammer (29) beweglich ist.

6. Bremsdruck-Regelsystem nach Anspruch 1, dadurch gekennzeichnet, daß die Rückförderpumpe (16) einen Motor (15) sowie durch diesen angetriebene, in Pumpenzylindern (17a, b) bewegliche Förderkolben (18a, b) aufweist, durch die aus der Ausdehnungskammer (29) über die an der Rückförderpumpe (16) befindlichen Einlaßventile (21a, b) und Auslaßventile (21c, d) sowie über eine Dämpferkammer (23) Bremsflüssigkeit zum Hauptbremszylinder (4) rückführbar ist.

## Claims

1. Brake pressure control system for braking systems with anti-locking and drive slip control with a main brake cylinder (4), which can be operated by a brake pedal (1), for the creation of brake pressure for at least one brake circuit, in which brake pipes (7, 8) lead to corresponding wheel brake cylinders (9a, 9b, 9c, 9d, 10a, 10b, 10c, 10d), where interposed into the brake pipes (7, 8) are brake pressure control valves in the form of solenoid valves (11, 12, 13, 14), which can, as desired, connect the main brake cylinder (4) to the wheel brake cylinders (9a, 9b, 9c, 9d, 10a, 10b, 10c, 10d) or interrupt the connection or, in the case of recirculation of brake fluid effected by a recirculation pump (16), connect the wheel brake cylinders (9a, 9b, 9c, 9d, 10a, 10b, 10c, 10d) with the main brake cylinder (4), with inlet and outlet valves (21a, 21b, 21c, 21d) being located on the recirculating pump (16), via which brake fluid can be drawn from a reservoir (27) and further delivered, with the outlet valves (21c, 21d) being connected to damper chambers (22, 23), characterised by the fact that between the wheel brake cylinders (10a to d) and the recirculating pump (16) there is at least one expansion chamber (29) on which are provided at least one inflow orifice (29a) and one discharge orifice (29b) and a closing mechanism which consists of a closing body (31) connected to a piston (30), a membrane or similar, with a valve seat (32) being fixed directly at the discharge orifice (29b).

2. Brake pressure control system in accordance with claim 1, characterised by the fact that the diameter of the valve seat (32) is reduced in relation to the area of the piston (30).

3. Brake pressure control system in accordance with claim 1 or 2, characterised by the fact that the closing body (31) is of plastic or rubber.

4. Brake pressure control system in accordance with one of the preceding claims, characterised by the fact that when brake fluid flows into the expansion chamber (29), the piston (30) can be moved against a spring (33).

5. Brake pressure control system in accordance with claim 4, characterised by the fact that the piston (30) is movable at a pressure of > 1 bar in the expansion chamber (29).

6. Brake pressure control system in accordance with claim 1, characterised by the fact that the recirculating pump (16) has a motor (15), as well as delivery plungers (18a, b) which can move in pump cylinders (17a, b) and which are driven by this motor, and through which brake fluid can be returned from the expansion chamber (29) via the inlet valves (21a, b) and outlet valves (21 c, d) located on the recirculating pump (16), and via a damper chamber (23), to the main brake cylinder (4).

## Revendications

1. Système de régulation de la pression de frein dans des installations de frein à régulation anti-blocage et anti-patinage à l'entraînement avec un maître-cylindre (4) actionné par une pédale de frein (1) pour générer une pression de frein pour au moins un circuit de frein dont des conduites de frein (7, 8) sont reliées à des cylindres de frein de roues respectifs (9a, 9b, 9c, 9d ; 10a, 10b, 10c, 10d), les conduites de frein (7, 8) ayant des soupapes de commande de pression de frein sous la forme d'électrovannes (11, 12, 13, 14) qui relient sélectivement le maître-cylindre (4) aux cylindres de frein de roues (9a, 9b, 9c, 9d ; 10a, 10b, 10c, 10d), ou coupent cette liaison ou encore, dans le cas d'un retour de liquide de frein assuré par une pompe de retour (16), relient les cylindres de frein de roues (9a, 9b, 9c, 9d ; 10a, 10b, 10c, 10d) au maître-cylindre (4), la pompe de retour (16) comportant des soupapes d'entrée et de sortie (21a, 21b, 21c, 21d) par lesquelles le liquide de frein est aspiré ou transféré d'un réservoir d'alimentation (27), les soupapes de sortie (21c, 21d) étant reliées à des chambres d'amortissement (22, 23), système caractérisé en ce qu'entre les cylindres de frein de roues (10a - 10d) et la pompe de retour (16), il y a au moins une chambre d'expansion (29) munie au moins d'une ouverture d'alimentation (29a) et d'une ouverture de sortie (29b) ainsi que d'une installation de fermeture composée d'un piston (30), d'une membrane ou organe de fermeture (31) analogue, et en ce que directement sur l'ouverture de sortie (29), il y a un siège de soupape (32).

2. Système de régulation de la pression de frein selon la revendication 1, caractérisé en ce que le diamètre du siège de soupape (32) est réduit par rapport à la surface du piston (30).

3. Système de régulation de la pression de frein selon la revendication 1 ou 2, caractérisé en ce que l'organe d'obturation (31) est en matière plastique ou en caoutchouc.

4. Système de régulation de la pression de frein selon l'une des revendications précédentes, caractérisé en ce qu'à l'arrivée du liquide de frein dans la chambre d'expansion (29), le piston (30) se déplace contre un ressort (33).

5. Système de régulation de la pression de frein selon la revendication 4 caractérisé en ce que le piston (3) est mobile pour une pression supérieure à 1 bar dans la chambre d'expansion (29).

6. Système de régulation de la pression de frein selon la revendication 1, caractérisé en ce que la pompe de retour (16) comprend un moteur (15) ainsi qu'un piston de transfert (18a, 18b) entraîné par le moteur et mobile dans les cylindres de pompe (17a, 17b), pour refouler le liquide de frein vers le maître-cylindre (4) hors de la chambre d'expansion (29) par l'intermédiaire des soupapes d'entrée (21a, 21b) et des soupapes de sortie (21c, 21d) de la pompe de retour (16) ainsi que par une chambre d'amortissement (23).
